# EUROPEAN PATENT APPLICATION

(11) **EP 4 840 566 A1**
(43) Date of publication of application: **18.11.2026**
(21) Application number: 25175955.1
(22) Date of filing: 13.05.2025
(51) Int. Cl.: B23B 51/00, B28D 1/14

(54) **METHOD FOR DRILLING AN UNDERCUT BOREHOLE FOR CHEMICAL ANCHORS**

(71) Applicant: Hilti Aktiengesellschaft, 9494 Schaan (LI)
(72) Inventor: Marcon, Marco, 86899 Landsberg am Lech (DE); Maichel, Michael, 86899 Landsberg am Lech (DE)
(74) Representative: Hilti Aktiengesellschaft Corporate Intellectual Property

(57) **Abstract**

Method for drilling an undercut borehole (1) for chemical and mechanical anchors, comprising an upper hole section (1a) of a first diameter (D1) and a lower hole section (1b) of a larger second diameter (D2), using the following steps:
- Providing a drilling tool (2; 2') with a drill bit, comprising at least two sets of knifes (2a, 2b), wherein a first knife set (2a) corresponds to the first diameter (D1) of the upper hole section (1a) and the second knife set (2b) corresponds to the second diameter (D2) of the lower hole section (1b),
- Generating the upper hole section (1a) with at least one radial groove (4a, 4b) by axially hammering the drilling tool to an upper hole section depth (3a),
- Generating the lower hole section (1b) by additionally drilling or oscillatory rotating the drilling tool to a lower hole section depth (3b).

## Description

The present invention relates to a method for drilling an undercut borehole, preferably for chemical or mechanical anchors applications, comprising an upper hole section of a first diameter and a lower hole section of a larger second diameter. Furthermore, the invention is directed to a drilling tool for carrying out the method according to the present invention.

The field of the invention relates to construction technology. Drilling on concrete or other similar materials, such as stone or masonry, is the beginning process of applications, such as mechanical or chemical anchoring. To increase the pull-out force of the anchor, an undercut borehole of interest here is used. An undercut borehole usually consists of an upper hole section, that establishes the connection with the environment. An adjacent coaxial lower hole section has a larger diameter than the diameter of the upper hole section in order to provide an undercut geometry.

### State of the art

According to the common knowledge, an undercut borehole is produced in a second step, after the borehole is drilled with another drilling tool. Therefore, the machine drills the borehole, and the user manually orbits to create the undercut, the using a non-cylindrical drill bit. Such a drill bit usually has a special movable attachment that at some point starts creating the borehole.

The document DE 10 2009 044 174 A1 describes a drilling tool for creating an undercut inside a precast borehole. A drill bit of the drilling tool has a tubular case and a cutting element radially and adjustably guided opposite to the case. A tappet is guided axially and adjustably in the case, where axial movement of the tappet is coupled with radial movement of the cutting element. The cutting element and the tappet are integrated as a drill rod. The drill rod is bent as arc-shaped or sharp-edged and the case exhibits a deflecting device. Furthermore, the case has a stopper element for attachment at borehole mouth. This specific drilling tool consists of several single components and is complicate to use.

It is an object of the present invention to provide a method for drilling an undercut borehole as well as a suitable drilling tool which is easy to use and applicable to chemical anchor boreholes.

### Summary of the invention

The object is solved by a method according to claim 1. A suitable drilling tool for carrying out the method is mentioned in claim 8. The dependent claims are directed to preferred embodiments and variants.

The method according to the present invention comprises the following manufacturing steps:
- Providing a drilling tool with a drill bit, comprising at least two sets of knifes, wherein a first knife set corresponds to the first diameter of the upper hole section and the second knife set corresponds to the second, larger diameter of the lower hole section,
- Generating the upper hole section by preferably axially hammering the drilling tool to an upper hole section depth,
- Generating the lower hole section by additionally drilling or oscillatory rotating the drilling tool to a lower hole section depth.

The performance improvement according to the invention is driven by the borehole geometry. The resulting borehole presents a large undercut, since the nominal diameter of the lower hole section is larger than the upper one. This increases the performance of both mechanical and adhesive anchor technologies. The performance and robustness increase will be more effective, if the mechanical or adhesive anchors are adapted to the shape of the undercut borehole. The upper hole section can be generated additionally by applying a small amplitude oscillation in relation to an amplitude used for generating the lower hole section.

Preferably, a removal step of the drilling tool from the undercut borehole is carried out by lightning the larger second knife set with the corresponding radial groove or grooves of the upper hole section generated by the previous hammering step. The position of the larger second knife set can be marked on the drilling tool shaft, because the drill bit must be removed after the drilling procedure. The removal step can be achieved from a handheld machine. However, more complicated geometries could also be achieved by an automatic drilling device, such as a robot. Drilling with a robot allows a more reputable borehole and it simplifies the removal of the drilling tool by following the same path which has been used for the drilling procedure. This opens the possibility to generate any possible geometry allowed by the combination of knife sets on the drill bit, oscillation and rotation.

According to another optional aspect of the present invention, an additional slight oscillatory rotation movement can be provided for the drilling tool during the initial hammering step. The oscillatory movement simplifies the procedure, because it makes much less likely for the drilling tool to get stuck in the borehole and speeds up the drilling process itself. The optional slight oscillatory movement can be switched off if the machine can drill also by hitting the material on the same spot without getting stuck or if it is possible to remove the drilling tool after the drilling. Preferably, the oscillatory rotational movement of the drilling tool during the initial hammering step is less than an oscillatory rotating of the drilling tool during the subsequent drilling step. The undercut geometry can be achieved by only oscillator movement without full rotations. Therefore, the amplitude of the oscillation needs to change along the borehole depth. The undercut represents the difference in oscillation amplitude. Thus, the amplitude of the oscillatory movement can be constant during the initial hammering step. Alternatively, the amplitude of the oscillatory rotational movement increases during the initial hammering step in order to provide a gradual transition between the upper hole section and the lower hole section of the undercut borehole. However, also a linear increase of the oscillation amplitude with different increase rates, exponential increase of the amplitude along the embedment depths, bilinear functions and the like are possible.

According to another optional aspect of the invention, it is suggested to remove the drilling dust from the borehole by using a hollow drilling tool which is connected to a suction system. The rotation in the drilling process is normally necessary for the knifes to sweep the full borehole cross-section, while the hammering crushes the material beneath. In addition, the rotation together with the drilling tool helix allows dust removal. Since in case of an oscillatory rotational movement the rotation is reduced, a hollow drilling tool is recommended. This allows to evacuate the dust during the drilling process through the drilling tool. Furthermore, different helix designs may allow a suitable dust removal, or the dust removal could also be delayed to the second drilling step.

A suitable drilling tool for carrying out the method as described above preferably comprises a drill bit with at least two sets of different knifes. A first knife set corresponds to the first diameter of the upper hole section and a second knife set corresponds to the second, larger diameter of the lower hole section.

According to one preferred embodiment, the second knife set comprises one radial extension section which extends from the bore shaft side in one direction.

According to another preferred embodiment, the second knife set comprises two radial extension sections which extend from the bore shaft side in two opposite directions.

According to further suitable embodiments, the second knife set provides more than two radial extension sections which extend symmetrically along the circumference from the side of the bore shaft.

In all cases the first knife set is symmetrically arranged with the second knife set in order to avoid an uneven drilling tool engagement.

### Detailed description

The invention is not only limited to the preferred embodiments as described above. The Figures show further technical details which are described below. It shows:
- Figure 1: a schematic side view of an undercut borehole by using a specific drilling tool according to the invention,
- Figures 2a-d: different cross-sections of the upper hole section of the bore hole by using a drilling tool with two different knife sets,
- Figures 3a-b: a schematic side view of undercut borehole shapes by applying different rotational oscillation movements, and
- Figures 4a-d: schematic front views to different drill bit designs.

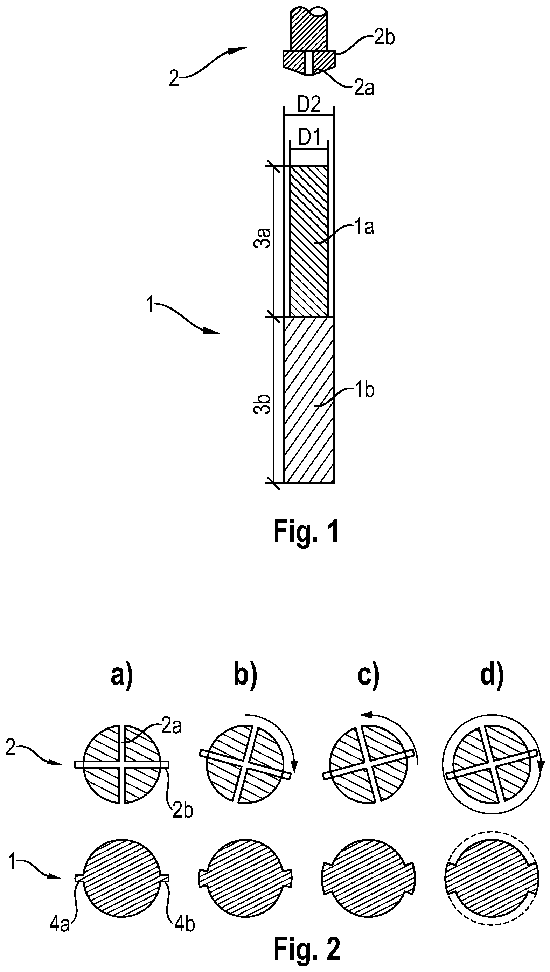

According to Figure 1, an undercut borehole 1, which is suitable for chemical and mechanical anchors, comprises an upper hole section 1a of an upper diameter D1 and an coaxial lower hole section 1b of a larger second diameter D2.

The undercut borehole 1 has been produced with a drilling tool 2 with a drilling bit, comprising two sets of knifes 2a and 2b, wherein the first short knife set 2a corresponds to the first diameter D1 of the upper hole section 1a and the second large knife set 2b corresponds to the second diameter D2 of the lower hole section 1b. The upper hole section 1a extends over an upper hole section depth 3a; the lower hole section 1b extends over a lower hole section depth 3b.

The drilling procedure needs a hammering for the entire borehole depths, while in the circumferential direction, the borehole starts either stationery or with small tangential oscillation, and it continues in the second step with full rotation.

The Figures 2a to 2d illustrate the movement of the drilling tool 2 (upper line) as well as the geometry of the borehole 1 (lower line) left on the substrate material. The shorter and larger knife sets 2a and 2b respectively are drilling the borehole 1 by hitting the material with the hammering function, crushing the material beneath according to Figures 2a to 2c. The larger knifes 2b must also go through the borehole, and they will create two opposite grooves 4a and 4b which afterwards are used to remove the drilling tool from the borehole. Once the undercut depth is reached according to Figure 2d, the drilling machine is shifted to rotation and hammering, and it can proceed drilling. In doing so, the larger, lower hole section is generated. The borehole size is now equal to the larger knife size, leaving an undercut of approximate size equal to the radius of the large knife minus the radius of the small knife.

Figure 2a shows the beginning of the axial hammering. Figure 2b shows an offset-movement in one rotational direction; Figure 2c shows an offset-movement to the other rotational direction, which in summa creates a slight oscillatory movement, which widens the grooves 4a and 4b. Figure 2d shows the production of the lower hole section by drilling or providing a larger oscillatory rotation to the drilling tool 2.

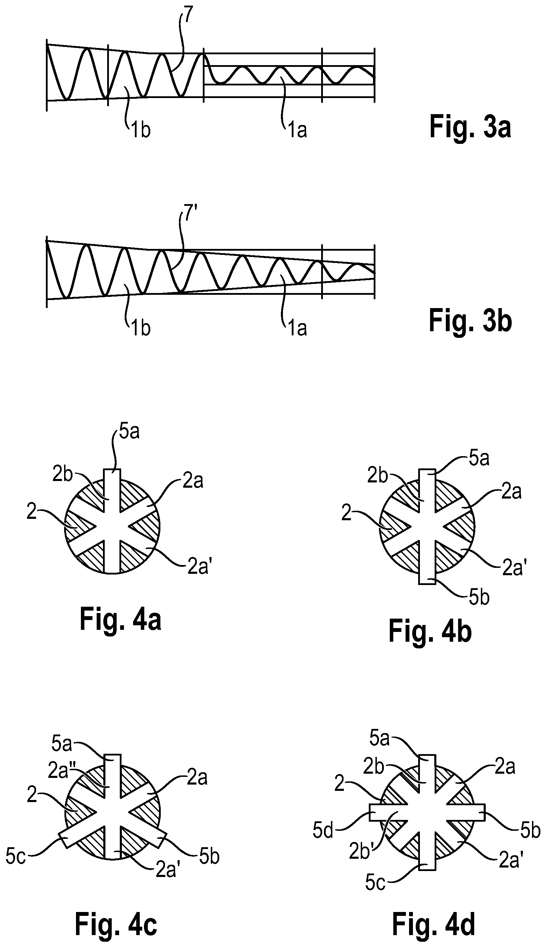

According to Figure 3a, a slightly oscillatory rotational movement 7 of the drilling tool is initially constant over the hammering step for providing the upper hole section 1a. If the drilling tool is switched to the subsequent drilling step, the oscillatory rotational movement 7 has been linearly increased in order to provide a circumferential cross-section for the lower hole section 1b.

According to Figure 3b, the amplitude of the oscillatory rotational movement 7' increases during the hole drilling procedure over the upper and lower hole section 1a, 1b of the undercut borehole.

The Figures 4a to 4d show different embodiments of a drill bit according to the invention. The radial extension sections 5a to 5d define the circumferential size of the grooves. The grooves are a necessary reduction of the undercut extent in the circumferential direction. Therefore, the higher the circumferential coverage of the groove is, the smaller will be the resulting undercut. Therefore, the number of larger second knife sets 2b coupled with the oscillation amplitude must leave room for the undercut. The larger, second knife sets 2b have to be larger than the first drilling knife sets 2a.

According to Figure 4a, the second knife set 2b extends only in one direction to one side of the drilling tool 2. The smaller first knife sets 2a and 2a' cover most of the bore hole cross-section. This design would ensure a big undercut.

According to Figure 4b, the large second knife set 2b extends in one direction on both sides of the drilling tool 2 and provides two radial extensions 5a and 5b. Furthermore, two symmetrically arranged smaller first knife sets 2a and 2a' are provided. This embodiment provides an undercut extent which is reduced compared to the previous embodiment. The drilling procedure, however, would lead to more symmetric stresses on the drilling machine.

According to Figure 4c, the large second knife set 2b extends symmetrically in three directions on three sides of the drilling tool 2. The smaller first knife sets 2a, 2a' and 2a" cover most of the borehole cross-section. In this embodiment, the undercut extent is reduced compared to the previous example. The drilling procedure, however, would lead to a more axial-symmetric borehole geometry, which would reduce the bias on performance of anchors depending on the direction.

According to Figure 4d, the large second knife set 2b and 2b' provides four extension sections 5a to 5d which extend symmetrically along the circumference from the side of the drilling tool 2. Additionally, two further first knife sets 2a and 2a' are provided. If such a four-knifes drill bit is used, the amplitude of the oscillation has to increase to drill. Therefore, the undercut will decrease to a point to which it may not being any improvements. A migration of the previous problem could be to add shorter knifes and reduce the amplitude of oscillation. At this point, a four-knifes version of the foregoing embodiments is provided with a limitation of the reduced undercut.

### Reference Signs

- 1: undercut borehole
- 2: drilling tool
- 3: hole section depth
- 4: radial groove
- 5: radial extension section
- 6: bore shaft
- 7: oscillatory rotational movement

## Claims

1. Method for drilling an undercut borehole (1) for chemical or mechanical anchors, comprising an upper hole section (1a) of a first diameter (D1) and a lower hole section (1b) of a larger second diameter (D2), using the following steps:
- Providing a drilling tool (2) with a drill bit, comprising at least two sets of knifes (2a, 2b), wherein a first knife set (2a) corresponds to the first diameter (D1) of the upper hole section (1a) and the second knife set (2b) corresponds to the second diameter (D2) of the lower hole section (1b),
- Generating the upper hole section (1a) with at least one radial groove (4a, 4b) by axially hammering the drilling tool to an upper hole section depth (3a),
- Generating the lower hole section (1b) by additionally drilling or oscillatory rotating the drilling tool to a lower hole section depth (3b).

2. Method according to claim 1, **characterized by**:
- removing the drilling tool (2) by aligning the larger second knife set (2b) with corresponding the radial grooves (4a, 4b) of the upper hole section (1a) generated by the previous hammering step.

3. Method according to claim 1, **characterized by**:
- providing an oscillatory rotational movement for the drilling tool (2) during the initial hammering step.

4. Method according to claim 3, wherein:
the oscillatory rotational movement of the drilling tool (2) during the initial hammering step is less than an oscillatory rotating of the drilling tool during the subsequent drilling step.

5. Method according to claim 4, wherein:
the amplitude of the oscillatory rotational movement is constant during the initial hammering step.

6. Method according to claim 4, wherein:
the amplitude of the oscillatory rotational movement increases during the initial hammering step.

7. Method according to one of the preceding claims, wherein:
for removing the drilling dust from the borehole (1), a hollow drilling tool (2) connected to a suction system is provided.

8. Drilling tool (2) with a drill bit, comprising two sets of knifes (2a, 2b), for carrying out the method according to one of the proceeding claims.

9. Drilling tool (2) according to claim 8, wherein:
the second knife set (2b) comprises one radial extension section (5a) which extends from the bore shaft (6) side in one direction.

10. Drilling tool (2) according to claim 8, wherein:
the second knife set (2b) comprises two radial extension sections (5a, 5b) which extend from the bore shaft (6) side in two opposite directions.

11. Drilling tool (2) according to claim 8, wherein:
the second knife set (2b) comprises more than two radial extension sections (5a - 5d) which extend symmetrically along the circumference from the side of the bore shaft (6).

12. Drilling tool (2) according to claim 8, wherein:
the first knife set (2a) is symmetrical arranged with the second knife set (2b).
